# EUROPÄISCHE PATENTSCHRIFT

(11) **EP 3 030 781 B1**
(45) Veröffentlichungstag und Bekanntmachung des Hinweises auf die Patenterteilung: **15.12.2021**
(21) Anmeldenummer: 14747930.7
(22) Anmeldetag: 05.08.2014
(51) Int. Cl.: F03D 1/06, F03D 13/20, B29C 65/00, B29C 65/02, B29L 31/08, B29D 99/00

(54) **VERBUNDBAUTEIL UND VERFAHREN ZUR HERSTELLUNG EINES VERBUNDBAUTEILS**
COMPOSITE STRUCTURAL PART AND METHOD FOR PRODUCING A COMPOSITE STRUCTURAL PART
ÉLÉMENT COMPOSITE ET PROCÉDÉ DE FABRICATION D'UN ÉLÉMENT COMPOSITE

(30) Priorität: 05.08.2013 DE 102013215381
(43) Veröffentlichungstag der Anmeldung: 15.06.2016
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2014/066833
(87) Internationale Veröffentlichungsnummer: WO 2015/018835

(56) Entgegenhaltungen:
- EP-A1- 2 307 193
- WO-A1-2012/025165
- US-A1- 2012 233 861
- US-A1- 2012 251 814
- US-A1- 2013 115 404
- None

## Beschreibung

Die Erfindung betrifft ein Verfahren zur Herstellung eines Verbundbauteils gemäß Anspruch 1. Die Erfindung betrifft auch ein entsprechendes Verbundbauteil gemäß Anspruch 6.

Verbundformteile sind Formteile aus zwei oder mehr miteinander verbundenen Materialien, die als Körper mit festen geometrischen Abmaßen hergestellt sind. Die im Verbund auftretenden Materialien weisen meist funktionale Eigenschaften auf, insbesondere zweckgebunden hinsichtlich ihres Einsatzgebietes. Für die Eigenschaften des erhaltenen Werkstoffes sind stoffliche und unter Umständen auch geometrische Eigenschaften der einzelnen Komponenten von Bedeutung. Dies ermöglicht es, Eigenschaften unterschiedlicher Komponenten miteinander zu verbinden, wodurch die Verbundwerkstoffe breite Anwendungsmöglichkeiten finden. Die für das Endprodukt benötigten Eigenschaften können durch die Wahl unterschiedlicher Ausgangsstoffe für die Komponenten nach Bedarf eingestellt werden.

Ein Verbundbauteil weist meist Eigenschaften auf, die unter Lasteinwirkung ein optimiertes Verhalten des Verbundformteiles darstellen. Die Eigenschaften können hinsichtlich z.B. einer gewissen Festigkeit, Steifigkeit oder Dehnbarkeit zuzuordnen sein. Ein Verbundformteil sollte unter Lasteinwirkung ein optimiertes Verhalten des Verbundes gegenüber einer Einzelkomponente des Verbundes darstellen. Die Entwicklung von Verbundformteilen geht grundsätzlich dahin, dass die geforderten Eigenschaften in Kombination zur Lebensdauer optimiert werden, um einer langjährigen Belastung standzuhalten. Insbesondere bei Rotorblättern und anderen Teilen einer Windenergieanlage werden hohe und stark variierende Lasteinwirkungen ausgeübt, die zudem mit einem an Größe zunehmenden Teil einer Windenergieanlage ebenfalls zunehmen. Insbesondere Rotorblätter sollten der statischen als auch den auftretenden dynamischen Belastungen standhalten.

Verbundbauteile können auf unterschiedliche Art und Weise hergestellt werden. So sind Rotorblätter einer Windenergieanlage heute hauptsächlich aus Faserverbundwerkstoffen gefertigt, in der verstärkende Fasern, meistens als Matte, in einer Matrix eingebettet sind, meist glasfaserverstärkter Kunststoff. Ein Rotorblatt wird meist in einer Halbschalen-Sandwichbauweise hergestellt. In zunehmendem Masse kommt z.B. kohlenstofffaserverstärkter Kunststoff zum Einsatz. Die hier geforderten Eigenschaften sind zum einen ein geringes Gewicht bei relativ hoher struktureller Festigkeit, sowie verschiedene Härtegrade und eine auf die Lasteinwirkung ausgerichtete Zugfestigkeit. Glasfaserverstärkte- bzw. kohlenfaserverstärkte Materialien könnten, jedenfalls grundsätzlich und unter den obigen Gesichtspunkten, den bisherigen Einsatz von Balsaholz hinsichtlich ihrer optimierten Festigkeit ablösen.

Die typische Verwendung von Verbundbauteilen ist die Integration derselben in eine Sandwichbauweise; dabei werden mehrere Schichten mit verschiedenen Eigenschaften eingebettet, um ein entsprechend eingestelltes Bauteil zu erhalten. Konstruktiv sind zum einen die Materialien, als auch die Orientierung bzw. Ausrichtung der einzelnen Komponenten von Bedeutung. Das Kernmaterial kann aus Materialien wie beispielsweise Papier, Pappe, Kunstoffe, Metalle, Balsaholz, Wellblech, Kunststoffe, Schaumstoffe und weiteren formgebenden Komponenten bestehen, meist verbunden mit konstruktiven Hohlräumen. Die Aufgabe des Kernmaterials ist es, Zugkräfte als auch Schubkräfte zu übertragen und die Deckschichten zu stützen.

Faserverstärkte Komponenten oder Verbundbauteile weisen Fasern in einem Laminat-Material verteilt auf, wobei die Fasern in mindestens einer bestimmten Richtung orientiert sind, um die höherwertige Eigenschaft des Faserverbundwerkstoffes zu erreichen. Grundsätzlich jedenfalls kann man drei wirkende Phasen im Material unterscheiden: sehr zugfeste Fasern, eine zunächst jedenfalls relativ weiche, einbettende Matrix und eine die beiden Komponenten verbindende Grenzschicht. Die Fasern können typischerweise aus Glas, Kohlenstoff, Keramik aber auch Aramid, Nylonfasern, Betonfasern, Naturfasern oder Stahlfasern bestehen. Die einbettende Matrix selbst, meist Polymere, hat eine materialspezifische Biegesteifigkeit, hält die Fasern in ihrer Position überträgt Spannungen zwischen ihnen und schützt die Fasern vor äußeren mechanischen und chemischen Einflüssen. Die Grenzschicht dient der Spannungsübertragung zwischen den beiden Komponenten. Problematisch bei faserverstärkten Verbundbauteilen sind mögliche Rissbildungen der jeweiligen Fasern in den beanspruchten Bereichen des Bauteils; diese können aufgrund von vor allem Biegemomente infolge einer erhöhten dynamischen mechanischen Belastung entstehen.

Faserverstärkte Komponenten oder Verbundbauteile mit jeweils einer bestimmten Anzahl von Fasern in einem Laminat- oder Matrixmaterial verbessern jedoch die mechanische Leistung der jeweiligen Komponenten erheblich. Für materialspezifische Kenngrößen wie Schubsteifigkeit und Biegesteifigkeit sowie die Konzentrierung der Fasern in eine definierte Richtung, können die mechanischen Stützeigenschaften der jeweiligen Komponenten im Einzelnen gezielt eingestellt werden, insbesondere in Bezug auf die Zugfestigkeit des jeweiligen des Verbundes. Ein Faktor zur Bemessung von Faserverbundwerkstoffen ist das Volumenverhältnis zwischen Fasern und Matrix. Je höher der Anteil an Fasern ist, desto fester, jedoch auch spröder wird der Verbundwerkstoff. Neben der Zugfestigkeit kann, falls der Verbund auf Druck beansprucht wird, auch die Schub- und Biegesteifigkeit eine Rolle spielen. Insbesondere ist zudem grundsätzlich bekannt, dass durch einen sogenannten sandwichartigen Verbundaufbau mit einem Kern und einer oder zwei Deckschichten --dem Prinzip eines T-Trägers folgend-- eine hohe mechanische Steifigkeit des Verbundes erreicht werden kann mittels einem mäßig schubsteifen Kern und wenigstens einer vergleichsweise biegesteifen Deckschicht wobei der Verbund gleichwohl in Leichtbauweise realisiert werden kann.

Es ist bekannt, dass geschäumte thermoplastische Kunststoffe als Kernschicht in Sandwichverbünden oder Verbundbauteilen eingesetzt werden. Die Herstellung von geschäumten Kunststoffplatten kann beispielsweise mittels eines Extrusionsverfahrens erfolgen. Für anspruchsvolle Anwendungen sind Sandwichverbunde erforderlich, in denen thermoplastische Kunststoffe mit Fasern versehen werden, erforderlich, welche über ein hohes Maß an Festigkeit und Steifigkeit, insbesondere Schub- und Biegesteifigkeit für Druck und ScherBelastungen, verfügen. Die Erhöhung der Materialkennwerte kann linear durch eine Aufsummierung von Schichtverbünden erfolgen. Eine zu hohe Masse an Verbundbauteilen kann jedoch ein hohes spezifisches Gewicht des einzelnen Bauteils bedingen. Es ist daher wünschenswert neben der Materialauswahl auch konstruktive Maßnahmen vorzugsehen, mittels denen ein Eigenschaftsbedarf des Verbundbauteiles entsprechend angepasst und/oder verbessert werden kann.

EP 2 307 193 offenbart ein flächenförmiges Strukturelement, wobei ein Schaumstoffkörper durch in einer Ebene nebeneinander angeordnete und miteinander zum Schaumstoffkörper verbundenen Körpersegmenten besteht, die an ihren anstoßenden Flächen flächige Schweißnähte aufweisen und dabei die Schweißnähte von in einem Abstandzueinander stehenden Ausnehmungen unterbrochen sind. Hierbei ist das flächenförmige Strukturelement insbesondere plattenartig und findet bevorzugt Einsatz als Kern oder als Kernschicht in Sandwichverbünden, beispielsweise in Rotorflügeln von Windkraftwerken.

In EP 1 308 265 wird ein Bauteil in langgestreckter Bauweise offenbart, welches dadurch gekennzeichnet ist, dass geschichtete, zueinander parallele Platten aus einem Faserkunststoffverbund bestehen. Wünschenswert ist ein verbessertes Verbundbauteil, das sich zum Einsatz bei Windenergieanlagen eignet.

Das Deutsche Patent- und Markenamt hat in der Prioritätsanmeldung folgenden Stand der Technik recherchiert: DE 1 504 768 A, DE 603 03 348 T2; EP 2 307 193 B1, EP 1 308 265A1.

WO2012/025165 A1 beschreibt grundsätzlich ein Verfahren zur Herstellung einer Kernstruktur eines Verbundbauteils für ein Rotorblatt einer Windenergieanlage; dieses weist eine Vielzahl von wenigstens zwei-komponentigen Verbundformteilen auf, wobei eine als Schaumprofil ausgebildete Komponente und eine als Faserschicht ausgebildete Komponente vorgesehen ist. Prismatische Elemente des Schaumprofils sind von den Faserschichten umgeben. Diese Faserschichten sind allenfalls dazu geeignet, mit Harz vergossen zu werden, um die prismatischen Elemente miteinander zu befestigen, wozu eine Harz empfangende Schicht ("*resin receiving layer"*) vorgesehen ist. Das insofern formgebende Kernmaterial hat, wie dort ersichtlich, eine Form eines Prismas mit dreieckiger Grundform und kann zur Bildung des Verbundbauteils als prismatischer Körper mit einer vieleckigen Grundfläche vorgesehen sein. Ein Vieleck der Grundfläche hat eine Basis und einen Winkel zur Basis, der 45° beträgt. Die Vielzahl der prismatischen Körper kann so zusammengefügt werden, wobei sich an aufeinandertreffenden Schenkeln eine funktionale Orientierung der Fügeschichten bildet, derart, dass die Fügeschicht in einem Winkel von 30°-60° zu einer Basisfläche wenigstens eines der aneinandergrenzenden Prismen verläuft.

US 2012/0233861 A1 offenbart in ähnlicher Weise eine Verbundstruktur aus prismatischen Elementen, welche durch ein Faserverstärkungstuch getrennt innerhalb der Verbundstruktur angeordnet sind. Das Faserverstärkungstuch dient hierbei allerdings zur Trennung der einzelnen prismatischen Elemente und zur Aufnahme einer Polymermatrix bzw. zur Aufnahme von Harzmaterial.

US 2013/115404 A1 gibt grundsätzlich an, dass unterschiedliche Methoden zum Zusammensetzen von prismatischen Körpern angewandt werden können; so beispielsweise werden Verfahren zum Fügen wie *bonding, thermoplastic welding, ultrasonic welding, laser beam welding* etc. erläutert. In WO 2010/012353 A1 ist ein flächenförmiges Strukturelement offenbart. Dieses nutzt grundsätzlich die erhöhte Druckfestigkeit von Schmelznähten. US 2012/251814 A1 beschreibt eine Verbundkernplatte, die Schaumstreifen aufweist. Diese Schaumstreifen können auch einen dreieckigen Querschnitt aufweisen und darüber hinaus wird auch Verstärkungsmaterial bzw. es werden Verstärkungsmatten eingesetzt, welche jedoch ebenfalls nur zur Aufnahme von Klebeharz dienen.

Aufgabe der Erfindung ist es, ein Verbundbauteil, eine Windenergieanlage und ein Verfahren anzugeben, die hinsichtlich des Standes der Technik verbessert sind, wenigstens aber eines der oben beschriebenen Probleme zu adressieren. Zumindest soll eine alternative Lösung zu einer im Stand der Technik bekannten Lösung vorgeschlagen werden. Insbesondere soll ein Verbundbauteil und ein Verfahren zur Herstellung eines Verbundbauteils derartig gestaltet sein, dass sich eine vereinfachte und gleichwohl weiterentwickelte Möglichkeit bietet, das Bauteil im Hinblick auf Steifigkeit und/oder Festigkeit zu optimieren. Insbesondere soll das Verbundbauteil und das Verfahren zur Herstellung eines Verbundbauteils in verbesserter Art und Weise umsetzbar sein. Insbesondere sollen das Verbundbauteil und das Verfahren eine langfristige und den Lasteinwirkungen entgegen gerichtete Steifigkeit und/oder Festigkeit ermöglichen, vorzugsweise unter Erhöhung sowohl der Biege- als auch Schubsteifigkeit.

Betreffend das Verfahren wird die Aufgabe durch die Erfindung mit einem Verfahren des Anspruchs 1 gelöst.

Die Erfindung geht aus von einem Verfahren zur Herstellung eines Verbundbauteils für eine Windenergieanlage, mit einer Vielzahl von wenigstens zwei-komponentigen Verbundformteilen, wobei eine erste Komponente aus einem formgebenden Kernmaterial und eine zweite Komponente als Teil einer Fügeschicht gebildet wird.

Die Erfindung geht von der Überlegung aus, dass ein Verbundbauteil aus zwei Komponenten hinsichtlich der angeforderten Materialeigenschaften durch eine Kombination optimiert werden kann. Hierbei werden Lösungen gefunden, welche die beiden Komponenten betreffen; so können Verbundbauteile mit z. B. einer gerichteten Faser innerhalb einer Einbettmatrix vorgesehen sein, um höheren Lasten entgegenzuwirken. Die Erfindung geht von der Überlegung aus, dass ein Verbundbauteil angefertigt werden sollte derart, dass ein Verbinden hinsichtlich einer Sandwichkonstruktion oder ähnlichen Konstruktionen möglich ist, insbesondere sollte dies durch Verkleben oder Verfügen, insbesondere Heißfügen oder Kleben möglich sein. Die Erfindung hat erkannt, dass ein Verbundbauteil verbesserte verbundspezifische Materialeigenschaften erhält, wenn neben der Wahl der Materialien die konstruktive Form des Verbundbauteiles dahingehend ausgelegt ist, dass Kräfte im Verbund verbessert aufgenommen werden können.

Erfindungsgemäß ist vorgesehen, dass das formgebende Kernmaterial, der Form eines Prismas folgend als prismatischer Körper, mit einer vieleckigen Grundfläche gebildet wird, wobei ein Vieleck der Grundfläche eine Basis und einen Winkel zur Basis hat, der zwischen 30°-60° beträgt, und eine Vielzahl der prismatischen Körper gefügt werden, wobei sich an aufeinander treffenden Schenkeln eine funktionale Orientierung der Fügeschichten bildet, derart, dass die Fügeschicht in einem Winkel von 30°-60° zu einer Basisfläche wenigstens eines der aneinandergrenzenden Prismen verläuft.

Vorteilhaft wird gemäß dem Konzept der Erfindung Längs- und Querausrichtung von Fasern oder Fäden oder dergleichen Stränge auf die geometrische Form des Kerns übertragen; insbesondere eine Längs- und Querausrichtung ergänzend unter Verwendung von Faserverbundbauteilen unterstützt. Das Verbundbauteil weist bei Lasteinwirkung, wie Zug oder Druck, aber auch bei Schubbeanspruchung entsprechend eine makro-mechanische Festigkeit auf, welche sich aus der orientierten Steifigkeit der Fügeschichten und die Kombination der Materialen ergibt.

Während das formgebende Kernmaterial eine funktionale Orientierung der Fügeschichten vorgibt, die gemäß einem Kräfteparallelogramm Zugkräfte in unterschiedlichen Richtungen abtragen kann, kann entlang der Schenkel ein Bauteil gefügt werden, welches Schub- und Torsionsspannungen aufnehmen kann und den entsprechenden Lasteinwirkungen wie Zug oder Druck und der entsprechenden Biegefestigkeit entgegenwirken kann. Das Fügen an den jeweiligen durch die Schenkel vorgegebenen Winkeln der funktionalen Orientierung erweist sich hier als vorteilhafte Maßnahme, die ggfs. durch eine Wahl des Winkels noch beeinflusst werden kann.

Gemäß dem Konzept der Erfindung kann einem dreidimensionalen Spannungstensor entgegengewirkt werden. Die vieleckige Grundfläche gibt die unterschiedlichen Orientierungsmöglichkeiten vor und bildet das Grundgerüst für das Geflecht der Fügeschichten, das der Lasteinwirkungen entgegenwirken. Die im Stand der Technik erwähnten konstruktiven Merkmale sind auf die Kraftnormalen (was einem einachsigen Spannungstensor entspricht) ausgerichtet dahingehend, dass eine Kraft senkrecht zur Oberfläche einwirkt. Darüberhinaus kann jedoch eine dreidimensionale Lasteinwirkung mit der gemäß dem Konzept der Erfindung vorteilhaften Kräfteverteilung in Abhängigkeit der Anordnung und der Fügemassen ermöglicht werden. Das Konzept ermöglicht eine Ausrichtung des Kernmaterials, welches den Festigkeiten entgegenwirkt, indem die Fügeschichten schräg zur Haupterstreckung des Bauteiles laufen und somit die Funktion von zusätzlichen verstärkenden konstruktiven Maßnahmen darstellen zu einem entsprechend in der Festigkeit gesteigerten Verbundbauteil.

Über die Wahl der Größe der Grundfläche können die Materialeigenschaften dahingehend variiert werden, dass sich durch die Größe der Fläche und somit durch den Volumenanteil des formgebenden Kerns die Materialkerngrößen bezüglich der Schubfestigkeit und Schubsteifigkeit einstellen lassen. Durch das Fügen der Schenkel in einer bestimmten geometrischen Anordnung, dem entsprechenden Winkelverlauf und einem entsprechenden Volumenanteil können Druckfestigkeit und Steifigkeit eingestellt werden, um somit insgesamt ein konstruktives und materialspezifisches Verbundbauteil zu erzeugen. Insbesondere die strukturelle Anordnung der formgebenden Kernmaterialien bezogen auf deren Schenkel führt zu einer optimierten und verbesserten konstruktiven Bauweise eines Verbundbauteiles, welches somit erhöhten Festigkeiten aufweisen kann.

Betreffend das Verbundbauteil wird die Aufgabe durch die Erfindung mit einem Verbundbauteil des Anspruchs 6 gelöst.

Die Erfindung geht aus von einem Verbundbauteil für eine Windenergieanlage mit einer Vielzahl von wenigstens zwei-komponentigen Verbundformteilen, wobei eine erste Komponente aus einem formgebenden Kernmaterial und eine zweite Komponente als Teil einer Fügeschicht gebildet ist. Erfindungsgemäß ist vorgesehen, dass das formgebende Kernmaterial, der Form eines Prismas folgend als prismatischer Körper, mit einer vieleckigen Grundfläche gebildet ist, wobei ein Vieleck der Grundfläche eine Basis und einen Winkel zur Basis hat, der zwischen 30°-60° beträgt, und - eine Vielzahl der prismatischen Körper gefügt sind, wobei an aufeinander treffenden Schenkeln eine funktionale Orientierung der Fügeschichten ausgebildet ist, derart, dass die Fügeschicht in einem Winkel von 30°-60 zu einer Basisfläche wenigstens eines der aneinandergrenzenden Prismen verläuft.

Das Konzept der Erfindung führt auch auf ein Verbundbauteil gemäß Anspruch 10 betreffend ein Verbundbauteil in Form eines Sandwichbauteils für eine Windenergieanlage unter Verwendung einer Vielzahl von Verbundformteilen zur Bildung eines Kernbauteils, wobei das Kernbauteil zumindest einseitig abgedeckt ist von mindestens einer Deckschicht.

Diese Weiterbildung schließt die Konstruktion eines Sandwichformteils mit ein, bei dem das Verbundbauteil aus einer kraftaufnehmenden Deckenlage besteht, die durch einen Kernwerkstoff auf Abstand erhalten wird. Die vorliegende Weiterbildung ermöglicht somit die zuvor genannten Eigenschaftskombinationen mit endlichen Maximalwerten, bei geringem Gewicht in einem Sandwichbauteil zu integrieren, welches in der Summe durch den linearen Zuwachs der Nennwerte bei höheren Lasteinwirkungen dauerfest entgegenwirkt.

Des Weiteren führt das Konzept der Erfindung auch auf ein Verbundbauteil in Form eines Rotorblattelements gemäß Anspruch 11. Insbesondere wird ein optimiertes Verbundbauteil in die Konstruktion eines Rotorblattes und insbesondere zudem in die des Rotorblatts typische Halbschalenbauweise integriert, um eine optimierte Dauerfestigkeit und Druckfestigkeit zu erzielen. Bevorzugter Weise ist das Rotorblatt optimiert hinsichtlich der anstehenden Zieh- bzw. Gravitationskräfte während des Betriebs. Dabei ist durch die Verwendung dieses Verbundbauteils eine Rissminimierung bzw. eine minimierte Rissfortpflanzung aufgrund des formgebenden Kerns als thermoplastischer Kunststoff erreicht.

Die Erfindung führt auf eine Windenergieanlage des Anspruchs 12, insbesondere mit einem Rotorblatt, welches mindestens ein Verbundbauteil aufweist. Da durch die immer größer werdende Dimensionierung der Rotorblätter und durch das strukturdynamische Verhalten der Rotorblätter immer größere Lasten zu erwarten sind, können diese mit dem Verbundformteil entsprechend den eingestellten materialspezifischen Kennwerten und dem konstruktiv zusammengefügten Verbundbauteil in verbesserter Weise aufgenommen werden. Die bislang verwendeten Materialien hinsichtlich ihrer materialspezifischen Eigenschaften sind aufgrund der vorgegebenen Masse limitiert und können daher durch solche Materialien ersetzt werden, die zusätzlich konstruktive Maßnahmen zur Festigkeitssteigerung aufweisen.

Vorteilhafte Weiterbildungen der Erfindung sind den Unteransprüchen zu entnehmen und geben im Einzelnen vorteilhafte Möglichkeiten an, das erweiterte Konzept im Rahmen der Aufgabenstellung sowie hinsichtlich weiterer Vorteile zur realisieren.

Insbesondere hat es sich als vorteilhaft erwiesen, dass das Fügen von mehreren Prismen an den aufeinandertreffenden Schenkeln eine funktionale Orientierung der Fügeschicht im Winkel von praktisch 45° zu einer Querachse des und/oder der Prismen bilden. Insbesondere gilt dies für eine funktionale Orientierung der Fügeschicht in einem Winkel von 45°, d.h. wobei der Winkel zur Basis des Vielecks bei 45° innerhalb einer Varianz von +/- 10°, vorzugsweise +/- 5°, liegt. Vorzugsweise ist vorgesehen, dass sich an den aufeinandertreffenden Schenkeln eine funktionale Orientierung der Fügeschichten bildet, die in einem Winkel von 45° innerhalb einer Varianz von +/- 10°, vorzugsweise +/- 5°, zu der Basisfläche des und/oder der Prismen verläuft.

Im Rahmen einer besonders bevorzugten Weiterbildung ist das formgebende Kernmaterial, der Form eines zylindrischen Körpers folgend, mit einer vieleckigen Grundfläche gebildet.

Es kann in einer Variante einer Weiterbildung jedoch auch das formgebende Kernmaterial zu einem prismatischen Körper in Form eines dreidimensionalen Polyeders gefügt werden, wobei der Winkel der Polyederflächen 30°-60°, vorzugsweise eine Polyederfläche einen Winkel von 45° innerhalb einer Varianz von +/- 10°, vorzugsweise +/- 5° zur Basisfläche und/oder Querachse beträgt. Insbesondere ist bei einem Verbundbauteil das formgebende Kernmaterial zu einem dreidimensionalen Polyeder gefügt, wobei der Winkel der Polyederflächen 30°-60°, vorzugsweise ein Winkel von 45°, zur Basis beträgt. In dieser Weiterwicklung wird die konstruktive Maßnahme zur Aufnahme der anliegenden Kräfte durch ein entsprechendes vielflächiges Gebilde realisiert. Die hier anliegenden Schenkel können konstruktiv leicht miteinander verfügt werden und entsprechend der Geometrie aufeinander geklappt werden. Dabei ist diese Weiterbildung eine Möglichkeit, ein Schichtsystem dahingehend zu konstruieren, indem an den Basisflächen weitere Ebenen aufgebaut werden und die Kräfteeinwirkung entsprechend der Schenkelausrichtung abgeführt wird.

Erfindungsgemäß sieht ein Verbundbauteil als eine zweite Komponente eine funktionale Orientierung von Fasern als Ummantelung des formgebenden Kernmaterials mit einem Winkel von 30° bis 60° vorzugsweise einem Winkel von 45° vor. Die Weiterbildung bietet eine zusätzliche vorteilhafte Verfestigung des Verbundbauteils hinsichtlich der Schub- und Torsionsspannungen an. Eine konstruktive Lösung des dreidimensional formgebenden Kernmaterials sowie die Ummantelung mit einer bestimmten Faserorientierung können verhältnismäßig hohe Druckfestigkeiten erreichen und einer hohen Lasteinwirkung entgegenwirken. Dem anliegenden dreidimensionalen Spannungstensor wirkt zum einen die dreidimensionale Orientierung der festigkeitssteigernden Fügeschicht entgegen und zum anderen die in den Fügeschichten integrierte funktionale Orientierung der Fasern. Es wird die Belastungsgrenze des Bauteils im Hinblick auf die Lebensdauer bei statischen und dynamischen Lasteinwirkungen auf ein Bauteil, welches in einer derartigen Weise gefertigt wurde, besonders vorteilhaft erhöht.

Für eine bevorzugte Weiterbildung ist ein Verbundbauteil vorgesehen, wobei das formgebende Kernmaterial und die Fügeschicht ein Querschnittsmuster aus flächig gefügten Sechsecken ergibt und aufeinandertreffende Schenkel eine funktionale Orientierung der Fügeschichten im Winkel von 30° bis 60° zur Querachse bilden, wobei die Querachse parallel zur Basis der sechseckigen Grundfläche ausgerichtet ist. Unter Weiterbildung des an sich bekannten Prinzips von Wabenmaterialien kann mittels einer Sechseck-Konstruktion eine besonders hohe Festigkeit hinsichtlich dynamischer und statischer Belastungen erzielt werden. Diese vorteilhafte Struktur in Verbindung mit eingesetzten Materialen kann besonders für große --vor allem dynamische-- Lasteinwirkungen verwendet werden. Die hier beschriebene Form des konstruktiv formgebenden Kernmaterials ermöglicht zudem ein einfaches Prozessieren des Fügens im besagten Winkel und bietet ein vergleichsweise großes Netz an Fügeschichten, welches eine Kräfteverteilung erlaubt.

Insbesondere ist bei einem Verbundbauteil das formgebende Kernmaterial mindestens eine Komponente der Gruppe Acrylnitril-Butadien-Styrol, Polyamide, Polylactat, Polymethylmethacrylat, Polycarbonat, Polyethylenterephthalat, Polyethylen, Polypropylen, Polystyrol, Polyetheretherketon und Polyvinylchlorid aufweist.

Im Rahmen der bevorzugten Weiterbildung kann für das formgebende Kernmaterial eine Komponente eingesetzt werden, die hinsichtlich der Lasteinwirkung spezifische Materialkennwerte aufweist. Dabei kann die Summe mehrerer formgebender Kernmaterialen den gewünschten maximalen verbundspezifischen Kennwert erreichen. Die Kombination aus den verschiedenen Materialen ermöglicht eine lokale Einstellung der Materialkenngrößen hinsichtlich angreifender Kräfte zusätzlich zur lokalen geometrischen Kräfteverteilung. Damit können bei verschiedenen bzw. mehreren thermoplastisches Kunststoffen ein bauteilspezifischer und konstruktionsspezifischer Materialkennwert eingestellt werden, der darüber hinaus durch die konstruktive Maßnahme der aufeinanderfolgenden Schenkel und entsprechender Fügeschicht eine optimierte Lösung für eine große Krafteinwirkung darstellt. Bevorzugt fügt beim Verbundbauteil die zweite Komponente den Verbund aus mehren Prismen zu einem thermoplastischen verformbaren Bauteil zusammenfügt mit vergleichsweise erhöhter Steifigkeit gegenüber dem formgebenden Kern.

Diese und andere Weiterbildungen ziehen Vorteil daraus, dass die Fügeschicht zwischen den einzelnen formgebenden Kernmaterialien eine erhöhte Schubfestigkeit aufweist, um den Widerstand eines Körpers gegen elastische Verformung durch eine entsprechende Kräfteverteilung zu ermöglichen. Die hier geforderte erhöhte Schubfestigkeit führt zu einer erhöhten Festigkeit innerhalb des Bauteiles und trägt dazu bei, dass die Kräfte entsprechend der geometrischen und der materialspezifischen Kenngröße verteilt werden. Die Schubfestigkeit kann in diesem Falle höher sein als die des formgebenden Kernmaterials, da die orientierten Fügeschichten die Weiterleitung der entsprechenden Schub- und Torsionsflächen begünstigen. Die Kraft bzw. die Materialkomponente der Fügeschicht kann hinsichtlich der Lasteinwirkung eine entsprechend erhöhte Schubsteifigkeit, gekoppelt mit einer gewissen Biege und Torsionssteifigkeit, vorweisen.

Insbesondere kann ein Verbundbauteil vorgesehen sein, bei dem das formgebende Kernmaterial durch zusätzlich innenliegende funktional gerichtete Fasern verstärkt ist. Die Kräfteverteilung kann vorzugsweise an den Fügeschichten erfolgen und damit Tangentialkräfte aufnehmen sodass Riss- bzw. Bruchsollstellen entgegengewirkt werden.

Funktional gerichtete Fasern, die den formgebenden thermoplastischen Kunststoff verstärken, können diesen hinsichtlich seiner materialspezifischen Kenngröße optimieren. Fasern, Fäden oder dergleichen Stränge können in der Art und Weise ausgerichtet sein, dass sie die entsprechenden Kräfte aufnehmen und diesen entgegenwirken. Damit kann in der Makromechanik als auch Mikromechanik eine Möglichkeit gegeben sein, Lasteinwirkungen und hohen dynamischen Belastungsspitzen, entsprechend konstruktiver und schichtspezifischer Lösungen, entgegenzuwirken.

Insbesondere können Fasern bzw. den Fäden oder dergleichen Geflecht-, Gestricke- oder Gewebe-Struktur in eine Fügeschicht eingebracht werden und können somit hohe Schub- und Torsionskräfte aufnehmen. Die einwirkenden Lasten, welche sich mehrachsig aufteilen und in der Ebene ein Flächenparallelogramm aufspannen, werden hier auch durch das konstruktive Merkmal, der geometrischen Ausrichtung der Fügeschicht aufgenommen. Hierbei kann zum einen durch die Variation der Vielecke ein Verbundbauteil gebaut werden, welches beliebig in der Breite und Höhe zusammengesetzt werden kann und welches lokal unterschiedlich auftretende Kräfte durch entsprechend geometrische Lösungen aufnehmen kann. Dabei sind die konstruktiven Merkmale die Merkmale, an denen sich die Schenkel in der Art und Weise berühren, dass sie einen Winkel zwischen 30° und 60° ausbilden bzw. einem bevorzugten Winkel von 45°. Dieser bevorzugte Winkel von 45° ist dem geschuldet, dass die Schubund Torsionskräfte im 45°-Winkel auftreten. Zum anderen kann die Kombination der Materialien für Kernmaterial und Faser vorteilhaft genutzt werden, so dass hier zudem neben der Geometrielösungsmöglichkeit auch eine entsprechend ausgerichtete Materiallösung möglich ist. Das Fügen erfolgt über die Schenkel und bildet gemäß der eingesetzten Materialien eine entsprechende Festigkeit und Steifigkeit erhöhende, die Fasern aufweisende Schicht, welche die Kräfte bei Lasteinwirkung dauerfest aufnehmen kann. Die Weiterleitung der Kräfte und die Verteilung erfolgt über das formgebende Kernmaterial, welches in Abhängigkeit von Volumen den duktilen Charakter erhöhen kann.

Erfindungsgemäß soll die zweite Komponente in Form einer Matte eingelegt werden und den formgebenden Kern mit zusammenfügen. Durch Einlegen von Matten kann ein einfaches Zusammenklappen von prismatischen Körpern ermöglicht werden, um so die erwähnten funktional ausgerichtete Schenkel mittels zwei oder mehr zusammengeklappten prismatischen Körpern, insbesondere Polyedern oder zylindrischen Körpern, zu bilden. Hierbei ist durch die geometrische Form des formgebenden Kernmaterials der Lösungseinsatz ein einfaches und kostengünstiges Herstellungsverfahren, welches zudem eine verbesserte Eigenschaft hinsichtlich der einzelnen Materialien vorweist. Die funktionale Orientierung wird hier durch die Matten hinsichtlich der eingestellten Eigenschaftsprofile gelöst. Dabei sind diese Matten funktionaler Bestandteil des Verbundbauteils und können die Festigkeit entsprechend steigern.

Die Verteilung von Fasern vorzugsweise in einem Winkel von 45° kann Lasten --in der dadurch definierten Fläche typischerweise optimiert-- bei diesem Winkel in verbesserter Weise entgegenwirken und deutlich Festigkeit erhöhend wirken. Es wurde erkannt, dass dynamische Belastungen vor allem ausgelöste Risse, auch Ermüdungsrisse genannt, bedingen, die typischerweise im 45°-Winkel zur Flächennormalen auftreten. Durch die Ausrichtung der Fasern kann die Rissbildung derartig reduziert werden, dass eine höhere Dauerfestigkeit vorausgesetzt werden kann.

Erfindungsgemäß wird in einem Verfahren zur Herstellung eines Verbundbauteils das formgebende Kernmaterial extrudiert. Die Herstellung der geometrischen Form des thermoplastischen Kunststoffes kann durch ein kostengünstiges und einfaches Verfahren erfolgen. Mittels Extrusion kann ein Strang der thermoplastischen Kunststoffmasse unter Druck kontinuierlich aus der formgebenden Öffnung hinaus gepresst werden, dabei weist die formgebende Öffnung die entsprechende Schenkelorientierung auf. Durch die Extrusion entsteht ein entsprechender Körper in beliebiger Länge und kann somit der Anwendung entsprechend produziert werden. Anhand der eingestellten Prozessgrößen kann durch dieses Verfahren eine kostengünstige einfache und schnelle Produktion der geometrischen thermoplastischen Kunststoffe gegeben werden.

Ein flechtgebildeartiges Fasersystem ist grundsätzlich weit aufzufassen als jede Art eines Strangsystems, das eine gewisse Variabilität hinsichtlich sich kreuzender zueinander ausgerichteter Fasern hat. Vorzugsweise ist dies ein Flechtwerk oder Flechtgebilde bei dem sich mehrere Stränge aus biegsamen und insofern als solches flexibles Material umfassend Fasermaterial ineinanderschlingen oder ein Gestricke, bei dem sich biegsames und insofern als solches flexibles Material umfassend Fasermaterial mit sich selbst verschlingt; auch maschenbildende Fadensysteme wie Gewirke sind möglich. Möglich, jedoch nicht beansprucht, sind gewebeartige Strukturen, bei denen die Stränge --zwar weniger bevorzugt aber möglich-- ganz oder teilweise rechtwinklig oder annähernd zu 90° zueinander geführt sind, vorzugsweise in einem Kreuzungspunkt einen Faserwinkel aufweisen, der bevorzugt zwischen 10° und 90° beträgt.

Insbesondere sind demnach solche Arten eines Strangsystems besonders bevorzugt, deren Faserwinkel sich zudem variabel einstellen lässt, insbesondere selbsttätig variabel einstellt, je nach Größe und Form des einzubringenden formgebenden Kernmaterials. Besonders bevorzugt ist demnach ein flexibles und variabel formbares flechtgebildeartiges Fasersystem mit variablem Faserwinkel. Gewisse Fasersystem unterstützen diese Eigenschaft besonders gut, wie z. B. insbesondere ein flechtgebildeartiges Fasersystem, das ausgewählt ist aus der Gruppe bestehend aus: Flechtwerk, Gestrick, Gewirk.

Ausführungsbeispiele der Erfindung werden nun nachfolgend anhand der Zeichnungen im Vergleich zum Stand der Technik, welcher zum Beispiel ebenfalls dargestellt ist, beschrieben. Dieser soll die Ausführungsbeispiele nicht notwendigerweise maßgeblich darstellen, vielmehr als die Zeichnung, wozu Erläuterung dienlich, in schematisierter und/oder leicht verzehrter Form aufgeführt. Im Hinblick auf Ergänzungen, der aus der Zeichnung unmittelbar erkennbaren Lehren, wird auf den einschlägigen Stand der Technik verwiesen. Dabei ist zu berücksichtigen, dass vielfältige Modifikationen oder Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im folgenden gezeigten und beschriebenen Ausführungsform oder beschränkt auf einen Gegenstand, der eingeschränkt wäre im Vergleich zu dem, in den Ansprüchen beanspruchten Gegenstand. Weitere Vorteile, Merkmale und Einzelheiten der Erfindung ergeben sich aus der nachfolgenden Beschreibung, der bevorzugten Ausführungsbeispiele sowie anhand der Zeichnung.

Im Einzelnen zeigt die Zeichnung in:
- Fig. 1A: eine schematische Darstellung des Verbundbauteiles in einer bevorzugten Ausführungsform, wobei der formgebende Kern als Prisma mit einem Vieleck als Grundfläche dargestellt wird;
- Fig. 1B: zeigt eine schematische Darstellung des Verbundbauteils in einer bevorzugten Ausführungsform, wobei der formgebende Kern als Prismen mit verschiedenen geometrischen Grundflächen darstellt wird;
- Fig. 2: eine schematische Darstellung der gefügten Prismen mit einer vieleckigen Grundfläche, wobei eine zusätzliche Ummantelung dargestellt ist;
- Fig. 3: eine schematische Darstellung des formgebenden Kerns einer bevorzugten Ausführungsform, wobei der thermoplastische Kunststoff als langgestreckter Schlauch mit einem runden Querschnitt und einer entsprechenden Ummantelung dargestellt ist;
- Fig. 4: eine schematische Darstellung des Verbundbauteils in Form eines zusammengeklappten Polyeders;
- Fig. 5: eine schematische Darstellung des Querschnitts eines Verbundbauteiles, wobei die Ausführungsform in der Querschnittsebene eine Wabenstruktur besitzt;
- Fig. 6: eine vereinfachte Querschnittsdarstellung durch ein Rotorblatt.
- Fig. 7: eine Windenergieanlage;
- Fig. 8: ein Ablaufdiagramm einer bevorzugten Ausführungsform eines Herstellungsverfahrens.

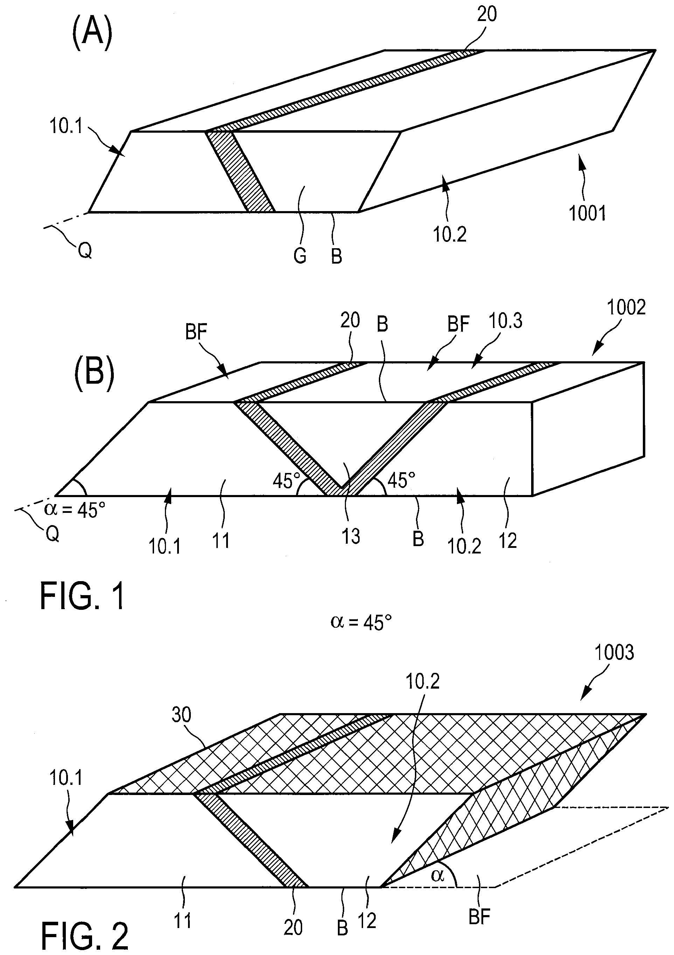

In Fig. 1 bis Fig. 8 sind für gleiche oder ähnliche Teile oder Teile gleicher oder ähnlicher Funktionen der Einfachheit halber gleiche Bezugszeichen benutzt worden.

Fig. 1A zeigt in einem Ausschnitt ein Verbundbauteil 1001 in einer ersten Ausführungsform, das in diesem Ausschnitt derart gestaltet ist, dass wenigstens zwei-komponentige Verbundformteile in Form zweier prismatischer Körper 10.1 10.2, hier zwei Prismen mit einer gleichschenkeligen trapezförmigen Grundfläche G, gestaltet sind. Die hier dunkel schraffierte Fügeschicht 20 ist in einem 45° Winkel ausgerichtet; d.h. diese ist 45° im Hinblick auf die eingezeichnete Querachse Q bezogen auf die Basis B der trapezförmigen Grundfläche G zu vermessen. Das formgebende Kernmaterial der prismatischen Körper 10.1 10.2 ist hier ein beliebig frei wählbarer thermoplastischer Kunststoff mit materialspezifischen Eigenschaften, welches zudem durch das Zusammenfügen eine Festigkeit erfährt, die durch die Fügeschicht 20 bedingt ist. Dabei kann durch die Wahl des Fügematerials und dem gewählten Volumenanteil der Fügeschichten eine lastspezifische mechanische Festigkeit erreicht werden, die den entsprechenden Lasteinwirkungen angepasst werden kann.

Fig. 1B zeigt in einem Ausschnitt ein Verbundbauteil 1002 in einer zweiten Ausführungsform, das in diesem Ausschnitt als Verbundformteile mit prismatischen Körpern 10.1 10.2 mit einer trapezförmigen Grundfläche 11, 12 und mit einem prismatischen Körpern 10.3 mit einer dreieckigen Grundfläche 13 gebildet ist. Die hier als Prismen zu bezeichnenden zylindrisch prismatischen Körpern 10.1, 10.2, 10.3 werden an ihren Schenkeln zusammengefügt, wobei hier die funktionale Orientierung der Fügeschicht an der Querachse Q den Winkel von 45° zur Basisfläche BF wenigstens eines der aneinandergrenzenden Prismen verläuft. Das Material und das Volumen der Fügeschicht 20 ist je nach Bedarf wählbar und durch die Schraffierung gekennzeichnet. Die hier schematische Skizzierung zeigt die funktionale Orientierung der Fügeschicht. Somit kann durch die Geometrie des formgebenden Kernmaterials eine der Kraft entgegen gerichtete Konstruktion realisiert werden.

In Fig. 2 zeigt in einem Ausschnitt ein Verbundbauteil 1003 in einer dritten Ausführungsform, welches in diesem Ausschnitt als Verbundkörper zwei als Prismen zu bezeichnende zylindrisch prismatischen Körper 10.1 10.2 zusammenfügt. Die Prismen weisen jeweils eine gleiche trapezförmige Grundfläche 11 auf, wobei die Oberfläche des Prismas von einer, eine flecht- oder gewebeartigen faserigen Bedeckung 30 bildenden zweiten Komponente als Teil einer Fügeschicht bedeckt ist, deren Fasern ausgerichtet sind. Somit können diese entsprechend der einwirkenden Kräfte ausgerichteten Fasern eine zusätzliche Festigkeit und Steifigkeit in der Ebene der Fügeschichten bedingen. Dabei kann sowohl die Makromechanik und als auch die Mikromechanik des Verbundbauteils durch die konstruktive Ausführung der Fügeschicht sowie der Orientierung der zusätzlichen Bedeckung optimiert ausgelegt werden.

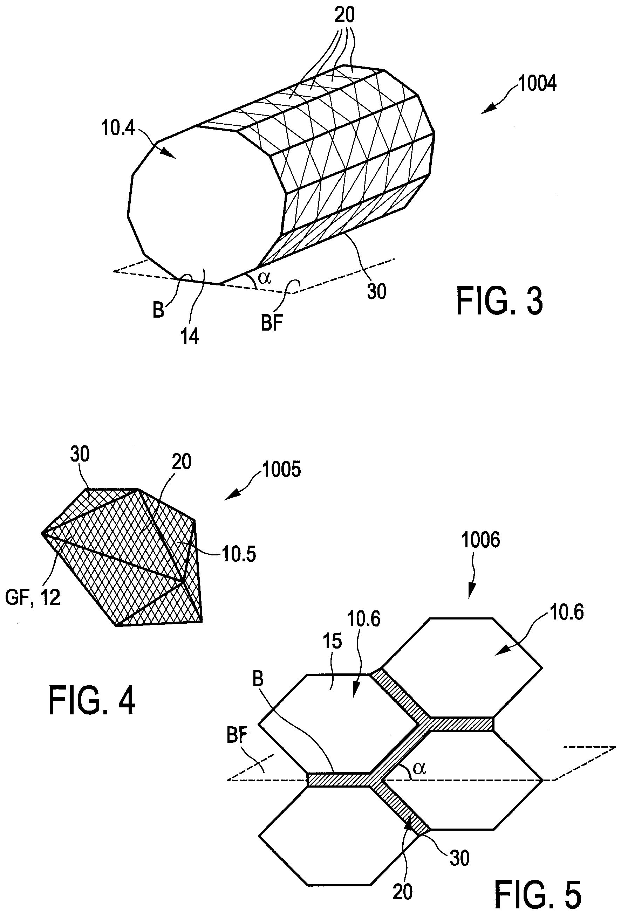

In Fig. 3 für ein Verbundbauteil 1004 in einer vierten Ausführungsform einen Verbundkörper mit einem als ein Prisma zu bezeichnenden zylindrisch prismatischen Körper 10.4, hier mit einer Grundfläche in Form eines Zwölfeckes 14; also eckig mit einer Basis B und einem entsprechend kleinen Winkel α einer Fügeschicht zur Basis B. Hier ist das Prisma ummantelt mit einer eine flechtoder gewebeartigen faserigen Bedeckung 30 bildenden zweiten Komponente als Teil einer Fügeschicht; nämlich hier mit einer funktional ausgerichteten Faserorientierung. Die Ummantelung kann unter Verwendung eines Geflechtschlauches realisiert werden, der in sich zusätzlich ausgerichtete Fasern aufweist. Durch die Ummantelung dieses zylindrisch prismatischen Körper 10.4 mit fast kreisähnlicher jedoch vieleckigen Grundfläche, kann nicht nur ein engmaschiges Netz von Fügeschichten 20 gebildet werden, sondern auch die Festigkeit neben dem großen Volumenanteil durch eine zusätzliche Orientierung der Fasern gesteigert werden.

Diese Art der Ausführung zeigt, dass für die Ummantelung ein Schlauch genutzt werden kann, der sich idealerweise einem Querschnitt eines Kreises anpasst, so dass in diesem Falle durch kleine Kanten des Vieleckes eine Ummantelung mit gerichteter Orientierung eingestellt werden kann, in der Art, dass sie eine erhöhte Festigkeit des Verbundbauteiles bedingen; gleichwohl ist die orientierte Assemblierung einer Vielzahl solcher Verbundformteile zu einem Verbundbauteil 1004 gut möglich.

Fig. 4 zeigt für ein Verbundbauteil 1005 in einer fünften Ausführungsform einen Verbundformkörper mit einem dreidimensional prismatischen Körper 10.5 in Form eines Polyeders. Es könnte auch ein Verbundbauteil 1005 darstellen, das aus Verbundkörpern in Form von Prismen mit dreieckigen Grundflächen GF, 12 zusammengesetzt ist. Gemäß dem Konzept der Erfindung stellt dabei eine Fügeschicht 20 eine die Festigkeit aufweisende Materialkomponente dar, die aufgrund ihrer Orientierung entlang der gerichteten Schenkel den formgebenden Kern stoffschlüssig umgibt. Diese Art von Verbundbauteilen ist in ihrer Herstellung einfach zu realisieren, da ein Fügen über ein einfaches Klappen gleicher geometrischer Prismen erfolgen kann. In den Fügeschichten kann ein Fasermaterial unter Bildung einer Bedeckung 30 etwa der oben erläuterten Art vorgesehen sein; muss aber nicht.

Fig. 5 zeigt im Querschnitt einen Ausschnitt eines Verbundbauteils 1006 in einer sechsten Ausführungsform; gebildet durch den Zusammenschluss von mehreren als ein Prisma zu bezeichnende zylindrische oder dreidimensionale gleichartige prismatische Körper 10.6, die mit einer Fügeschicht 20 mit einer Bedeckung zusammengefügt sind, so dass sich im Querschnitt eine echte Wabenstruktur ergibt. Wabenstrukturen weisen eine hohe Festigkeit auf und es können entsprechende dynamische und statistische Belastungen aufgefangen werden. Durch die Wahl der Prismen mit einer sechseckigen Grundfläche und der gleichzeitigen Orientierung der Schenkel in einem ausgewählten Winkelbereich 30°-60° zur Basis B bzw. zur Basisfläche BF entsteht eine Wabenstruktur, die durch die Orientierung und der Wahl der entsprechenden Fügeschicht einer hohen Lasteinwirkung entgegenwirken kann. Damit kann mit einer Wabenstruktur, insbesondere gebildet nach einem Verfahren gemäß dem Konzept der Erfindung eine erhöhte Festigkeit für das Verbundbauteil 1006 erreicht werden.

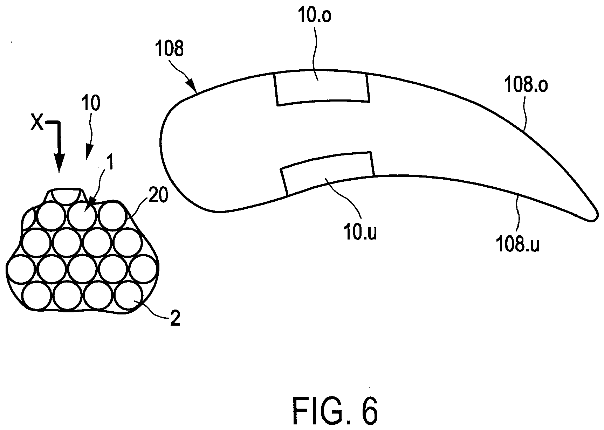

In Fig. 6 ist ein Rotorblatt 108 für eine Windenergieanlage 100 vereinfacht im Querschnitt dargestellt. Dieses Rotorblatt 108 umfasst eine obere Halbschale 108.o und eine untere Halbschale 108.u, wobei in diesen Schalen Tragstrukturen 10.o und 10.u als Verstärkung vorgesehen sind, welche die am Rotorblatt angreifenden Lasten aufnehmen und abtragen können. Diese Tragstrukturen können durch Rotorblattelemente, zum Beispiel in einer Sandwichbauweise, bzw. durch besagte Verbundbauteile 1001,1002, 1003, 1004, 1005, 1006 ausgebildet werden, um eben diese entsprechenden Lasten aufzunehmen. Das Detail X der Fig. 6 zeigt eine solche Tragstruktur 10 mit einer Vielzahl von Verbundformteilen 1, aus einem Kernmaterial 2 umgeben von einem flexiblen, flechtgebildeartigen Fasersystem, die --hier beispielhaft-- in dichtester Packung zur Bildung eines Verbundbauteils 1001,1002, 1003, 1004, 1005, 1006 für die Tragstruktur 10 zusammengesetzt sind.

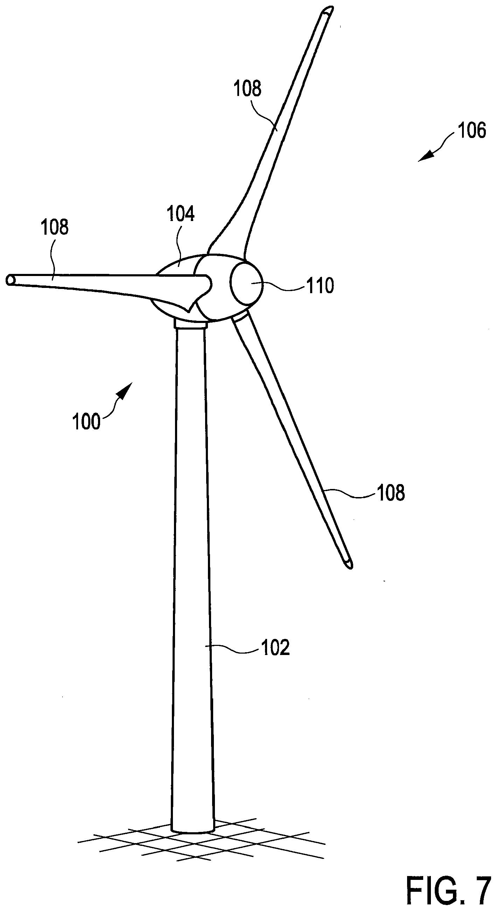

Fig. 7 zeigt eine Windenergieanlage 100 mit einem Turm 102 und einer Gondel 104. An der Gondel 104 ist ein Rotor 106 mit drei Rotorblättern 108 --etwa analog in der Art eines Rotorblatts 108 der Fig. 4-- und einem Spinner 110 angeordnet. Der Rotor 106 wird im Betrieb durch den Wind in eine Drehbewegung versetzt und treibt dadurch einen Generator in der Gondel 104 an.

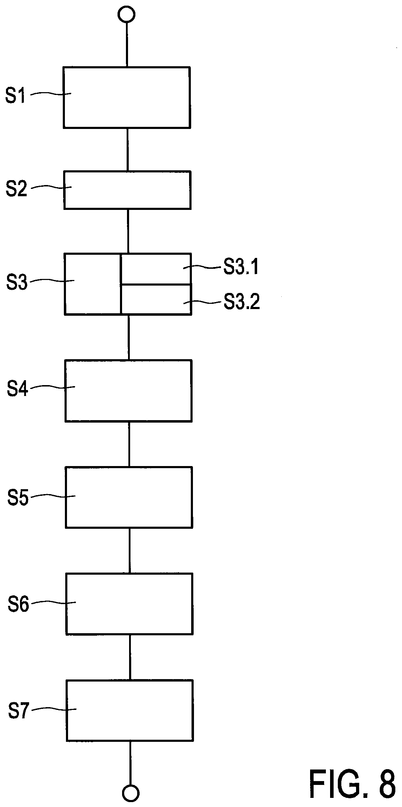

Fig. 8 zeigt im Rahmen eines Flussdiagramms eine nicht beanspruchte Ausführungsform eines Herstellungsverfahrens für ein Verbundbauteil 1001,1002, 1003, 1004, 1005, 1006 bzw. ein Assemblieren einer Vielzahl von Verbundformteilen 1 zu einem Verbundbauteil 1001,1002, 1003, 1004, 1005, 1006 für eine Tragstruktur 10, zur Einbringung in ein Rotorblatt 108 einer Windenergieanlage 100. In einem ersten Schritt S1 wird ein thermoplastischer Kunststoff und in einem Schritt S2 wird ein Faserverbundhalbzeug in Form eines Flechtgebildes, bevorzugt als Matte oder Geflechtschlauch, in der zuvor erläuterten Art zur Verfügung gestellt.

In einem dritten Schritt S3 wird der thermoplastische Kunststoff als formgebendes Kernmaterial als Unendlichstrang produziert werden und kann in einem Schritt S4 in eine Vielzahl von Verbundformteile je nach Bedarf geteilt werden; nämlich der Form eines Prismas folgend als prismatischer Körper, mit einer vieleckigen Grundfläche gebildet wird, wobei ein Vieleck der Grundfläche eine Basis und einen Winkel zur Basis hat, der zwischen 30°-60° beträgt.

In einer ersten Variante kann in einem Schritt S3.1 der thermoplastische Kunststoff aus einer Granulatmischung einem Extruder zugeführt werden am Ausgang des Extruders als weicher Strang in einen Geflechtschlauch direkt eingebracht werden.

Der Geflechtschlauch weist sich kreuzende Fasern auf, die an einem Kreuzungspunkt einen Faserwinkel von 45° haben und dieser zieht sich um das noch weiche formgebende Kernmaterial wenn dieses sich abkühlt. Dadurch verfestigt sich das weiche formgebende Material um oder an dem Geflechtschlauch bzw. an den Fasern desselben, so dass ein Verbund zwischen Gelechtschlauch und dem thermoplastischen Material entsteht, mit dem Geflechtschlauch ggfs. vollständig oder jedenfalls teilweise, aber nicht notwendigerweise, an der Außenseite desselben; das weiche formgebende Material kann innerhalb der Konturen des Geflechtschlauches verbleiben oder auch durch das Geflecht ganz oder teilweise nach außen dringen; also im letzteren Fall herausquellen und ggfs. sogar sich außen wieder um den Geflechtschlauch legen und diesen umschließen.

Eine Vielzahl der prismatischen Körper kann bereits als Verbundkörper vorliegend zu einem Verbundbauteil gefügt werden, wobei sich an aufeinander treffenden Schenkeln eine funktionale Orientierung der Fügeschichten bildet, derart, dass die Fügeschicht in einem Winkel von 30°-60° zu einer Basisfläche wenigstens eines der aneinandergrenzenden Prismen verläuft.

Ein ähnlicher Prozess kann mit einer Geflechtmatte durchgeführt werden. In einer zweiten Variante kann in einem Schritt S3.2 der thermoplastische Kunststoff aus einer Granulatmischung einem Extruder zugeführt werden am Ausgang des Extruders als weicher Strang zur Verfügung gestellt und zerteilt werden. Die so erhaltenen Vielzahl prismatischer Körper können --mit oder ohne zwischenliegender Matte-- gefügt werden, wobei sich an aufeinander treffenden Schenkeln eine funktionale Orientierung der Fügeschichten bildet, derart, dass die Fügeschicht in einem Winkel von 30°-60° zu einer Basisfläche wenigstens eines der aneinandergrenzenden Prismen verläuft. Bevorzugt werden die Verbundformköper dazu aufeinandergeklappt; auch mit einer dazwischenliegenden, also in einer Fügeschicht 20 liegenden Geflechtmatte gestaltet sich dieser Prozess und ein sich anschließendes Heißfügen als vergleichsweise einfach.

Die im Gegenstand der Anmeldung allgemein definierte zweite Komponente als Teil einer Fügeschicht 20 kann gemäß dieser Varianten der Ausführungsform eine Geflechtmatte oder eine Heißnaht sein.

In etwa der im Detail X der Fig. 6 gezeigten Art folgend können die Vielzahl von Verbundformteile in einem Schritt S5 zu einer Tragstruktur zusammengesetzt werden.

Die Tragstruktur kann in einem Schritt S6 in eine Halbschale eines Rotorblatts 108 oder in ein anderes Teil einer Windenergieanlage 100 eingebracht werden. Im vorliegenden Fall werden die Halbschalen zu einem Rotorblattrohling assembliert und den weiteren Fertigungsschritten unterzogen bis das Rotorblatt in einem Schritt S7 an einer Windenergieanlage 100 der Fig. 7 gezeigten Art angebracht werden kann.

## Patentansprüche

1. Verfahren zur Herstellung eines Verbundbauteils (1001, 1002, 1003, 1004, 1005, 1006) für eine Windenergieanlage (100) mit einer Vielzahl von wenigstens zwei-komponentigen Verbundformteilen (1), wobei eine erste Komponente aus einem formgebenden Kernmaterial (2) und eine zweite Komponente als Teil einer Fügeschicht (20) gebildet wird, wobei
- das formgebende Kernmaterial (2), der Form eines Prismas folgend als prismatischer Körper (10.1, 10.2, 10.3, 10.4, 10.5, 10.6), mit einer vieleckigen Grundfläche (G, GF) gebildet wird, wobei ein Vieleck der Grundfläche (G, GF) eine Basis (B) und einen Winkel zur Basis hat, der zwischen 30°-60° beträgt, und
- eine Vielzahl der prismatischen Körper (10.1, 10.2, 10.3, 10.4, 10.5, 10.6) gefügt werden, wobei sich an aufeinandertreffenden Schenkeln eine funktionale Orientierung der Fügeschichten (20) bildet, derart, dass die Fügeschicht (20) in einem Winkel von 30°-60° zu einer Basisfläche (BF) wenigstens eines der aneinandergrenzenden Prismen verläuft, wobei
- die zweite Komponente in Form einer Matte gebildet ist, wobei
- das formgebende Kernmaterial (2) durch Extrusion zur Verfügung gestellt wird, und
- die Matte zwischen einem ersten und einem zweiten prismatischen Körper eingebracht wird, wobei die zweite Komponente als Abdeckung oder Ummantelung des formgebenden Kernmaterials eine funktionale Orientierung von Fasern mit einem Winkel von 30°-60° zueinander aufweist, und sich mit dem formgebenden Kern der prismatischen Körper verbindet, wobei
- sich sowohl die erste Komponente als auch die zweite Komponente in die Fügeschicht (20) erstrecken, und die erste Komponente und die zweite Komponente stoffschlüssig in der Fügeschicht (20) verbunden sind, und
- das Verbundbauteil über die zweite Komponente mittels einer thermoplastischen Matrix aus der Vielzahl von prismatischen Körpern (10.1, 10.2, 10.3, 10.4, 10.5, 10.6) zu einem verformbaren Bauteil mit vergleichsweise erhöhter Schubsteifigkeit zusammengefügt ist durch Heißfügen.

2. Verfahren nach Anspruch 1, **dadurch gekennzeichnet, dass** der Winkel zur Basis (B) des Vielecks bei 45° innerhalb einer Varianz von +/- 10°, vorzugsweise +/- 5°, liegt.

3. Verfahren nach Anspruch 1 oder 2, **dadurch gekennzeichnet, dass** sich an den aufeinandertreffenden Schenkeln eine funktionale Orientierung der Fügeschichten (20) bildet, die in einem Winkel von 45° innerhalb einer Varianz von +/- 10°, vorzugsweise +/-5°, zu der Basisfläche (BF) der Prismen verläuft.

4. Verfahren nach einem der Ansprüche 1 bis 3, **dadurch gekennzeichnet, dass** das formgebende Kernmaterial (2), der Form eines zylindrischen Körpers folgend, mit einer vieleckigen Grundfläche (G, GF) gebildet ist.

5. Verfahren nach einem der vorhergehenden Ansprüche, **dadurch gekennzeichnet, dass** das formgebende Kernmaterial (2) zu einem prismatischen Körper (10.1, 10.2, 10.3, 10.4, 10.5, 10.6) in Form eines dreidimensionalen Polyeders gefügt wird, wobei der Winkel der Polyederflächen 30°-60°, vorzugsweise eine Polyederfläche einen Winkel von 45° innerhalb einer Varianz von +/- 10°, vorzugsweise +/- 5° zur Basisfläche (BF) beträgt.

6. Verbundbauteil (1001, 1002, 1003, 1004, 1005, 1006) für eine Windenergieanlage (100) mit einer Vielzahl von wenigstens zwei-komponentigen Verbundformteilen (1), wobei eine erste Komponente aus einem formgebenden Kernmaterial und eine zweite Komponente als Teil einer Fügeschicht (20) gebildet ist, wobei
- das formgebende Kernmaterial (2), der Form eines Prismas folgend als prismatischer Körper (10.1, 10.2, 10.3, 10.4, 10.5, 10.6), mit einer vieleckigen Grundfläche (G, GF) gebildet ist, wobei ein Vieleck der Grundfläche (G, GF) eine Basis und einen Winkel zur Basis hat, der zwischen 30°-60° beträgt, und
- eine Vielzahl der prismatischen Körper (10.1, 10.2, 10.3, 10.4, 10.5, 10.6) gefügt sind, wobei an aufeinandertreffenden Schenkeln, eine funktionale Orientierung der Fügeschichten ausgebildet ist, derart, dass die Fügeschicht in einem Winkel von 30°-60° zu einer Basisfläche (BF) wenigstens eines der aneinandergrenzenden Prismen verläuft,
- die zweite Komponente in Form einer Matte gebildet ist, wobei das formgebende Kernmaterial (2) durch Extrusion zur Verfügung gestellt ist, und
- die Matte zwischen einem ersten und einem zweiten prismatischen Körper (10.1, 10.2, 10.3, 10.4, 10.5, 10.6) eingebracht ist, wobei die zweite Komponente als Abdeckung oder Ummantelung des formgebenden Kernmaterials eine funktionale Orientierung von Fasern mit einem Winkel von 30°-60° zueinander aufweist, und mit dem formgebenden Kern der prismatischen Körper (10.1, 10.2, 10.3, 10.4, 10.5, 10.6) verbunden ist, wobei
- sich sowohl die erste Komponente als auch die zweite Komponente in die Fügeschicht erstrecken, wobei die erste Komponente und die zweite Komponente stoffschlüssig in der Fügeschicht verbunden sind, und
- das Verbundbauteil über die zweite Komponente mittels einer thermoplastischen Matrix aus der Vielzahl von prismatischen Körpern (10.1, 10.2, 10.3, 10.4, 10.5, 10.6) zu einem verformbaren Bauteil mit vergleichsweise erhöhter Schubsteifigkeit zusammengefügt ist durch Heißfügen.

7. Verbundbauteil nach Anspruch 6 **dadurch gekennzeichnet, dass**
- das formgebende Kernmaterial (2) und/oder die funktionale Orientierung der Fügeschichten (20) ein flächiges Querschnittsmuster aus Sechsecken bildet, und,
- insbesondere flächig gefügte, aufeinander treffende Schenkel der funktionalen Orientierung der Fügeschichten (20) im Winkel von 30°-60°, vorzugsweise von 45° innerhalb einer Varianz von +/- 10°, vorzugsweise +/- 5°, zu einer Basisfläche (BF) der Prismen verlaufen, wobei die Basisfläche (BF) parallel zur Basis des Sechsecks ausgerichtet ist.

8. Verbundbauteil nach Anspruch 6 oder 7, **dadurch gekennzeichnet, dass** das formgebende Kernmaterial (2) mindestens eine Komponente der Gruppe Acrylnitril-Butadien-Styrol, Polyamide, Polylactat, Polymethylmethacrylat, Polycarbonat, Polyethylenterephthalat, Polyethylen, Polypropylen, Polystyrol, Polyetherketon und Polyvinylchlorid enthält.

9. Verbundbauteil nach einem der Ansprüche 6 bis 8, **dadurch gekennzeichnet, dass** das formgebende Kernmaterial (2) durch zusätzliche innenliegende, funktional gerichtete Fasern verstärkt wird.

10. Verbundbauteil (1001, 1002, 1003, 1004, 1005, 1006) nach einem der Ansprüche 6 bis 9 in Form eines Sandwichbauteils für die Windenergieanlage (100) unter Verwendung einer Vielzahl von Verbundformteilen (1) zur Bildung eines Kernbauteils, **dadurch gekennzeichnet, dass** das Kernbauteil zumindest einseitig abgedeckt ist von mindestens einer Deckschicht.

11. Verbundbauteil (1001, 1002, 1003, 1004, 1005, 1006) nach einem der Ansprüche 6 bis 10 in Form eines Rotorblattelements für ein Rotorblatt (108) der Windenergieanlage (100) unter Verwendung einer Vielzahl von Verbundformteilen (1) zur Bildung eines Kernbauteils **dadurch gekennzeichnet, dass** das Kernbauteil umgeben ist von mindestens einer Rotorblatt-Deckschicht, zur Bildung des Rotorblattelements in Form eines Sandwichbauteils für die Windenergieanlage (100).

12. Windenergieanlage aufweisend einen Turm (102), eine Gondel (104) und einen Rotor (106) mit einer Rotornabe (110) und einer Anzahl von Rotorblättern (108), **dadurch gekennzeichnet, dass** das Rotorblatt ein Verbundbauteil nach einem der Ansprüche 6 bis 11 aufweist und/oder der Turm und/oder die Gondel und/oder die Rotornabe ein Verbundbauteil (1001, 1002, 1003, 1004, 1005, 1006) nach einem der Ansprüche 6 bis 10 aufweist.

## Claims

1. Method for producing a composite component (1001, 1002, 1003, 1004, 1005, 1006) for a wind turbine (100) having a large number of at least two-component shaped composite components (1), wherein a first component is formed from a shaping core material (2) and a second component is formed as a component of a joining layer (20), wherein
- the shaping core material (2), following the shape of a prism, is formed as a prismatic member (10.1, 10.2, 10.3, 10.4, 10.5, 10.6) having a polygonal base face (G, GF), wherein a polygon of the base face (G, GF) has a base (B) and an angle relative to the base which is from 30° to 60°, and
- a large number of the prismatic members (10.1, 10.2, 10.3, 10.4, 10.5, 10.6) are joined, wherein at abutting members a functional orientation of the joining layers (20) is formed in such a manner that the joining layer (20) extends at an angle of from 30° to 60° with respect to a base face (BF) of at least one of the adjacent prisms, wherein
- the second component is formed in the form of a mat,
wherein
- the shaping core material (2) is provided by means of extrusion, and
- the mat is introduced between a first and a second prismatic member, wherein the second component has as a cover or a casing of the shaping core material a functional orientation of fibres having an angle of from 30° to 60° with respect to each other, and is connected to the shaping core of the prismatic members, wherein
- both the first component and the second component extend into the joining layer (20) and the first component and the second component are connected in a materially engaging manner in the joining layer (20), and
- the composite component is joined via the second component by means of a thermoplastic matrix comprising the large number of prismatic members (10.1, 10.2, 10.3, 10.4, 10.5, 10.6) in order to form a deformable component having a comparatively high shear stiffness by means of hot-joining.

2. Method according to claim 1, **characterised in that** the angle relative to the base (B) of the polygon is 45° within a variance of +/- 10°, preferably +/- 5°.

3. Method according to claim 1 or 2, **characterised in that** there is formed at the abutting members a functional orientation of the joining layers (20) which extends at an angle of 45° within a variance of +/- 10°, preferably +/- 5°, with respect to the base face (BF) of the prisms.

4. Method according to any one of claims 1 to 3, **characterised in that** the shaping core material (2), following the shape of a cylindrical member, is formed with a polygonal base face (G, GF).

5. Method according to any one of the preceding claims, **characterised in that** the shaping core material (2) is joined to form a prismatic member (10.1, 10.2, 10.3, 10.4, 10.5, 10.6) in the form of a three-dimensional polyhedron, wherein the angle of the polyhedral faces is from 30° to 60°, preferably a polyhedral face, is an angle of 45° within a variance of +/- 10°, preferably +/- 5°, with respect to the base face (BF).

6. Composite component (1001, 1002, 1003, 1004, 1005, 1006) for a wind turbine (100) having a large number of at least two-component shaped composite components (1), wherein a first component is formed from a shaping core material and a second component is formed as a component of a joining layer (20), wherein
- the shaping core material (2), following the shape of a prism, is formed as a prismatic member (10.1, 10.2, 10.3, 10.4, 10.5, 10.6) having a polygonal base face (G, GF), wherein a polygon of the base face (G, GF) has a base and an angle relative to the base which is from 30° to 60°, and
- a large number of the prismatic members (10.1, 10.2, 10.3, 10.4, 10.5, 10.6) are joined, wherein at abutting members a functional orientation of the joining layers is formed in such a manner that the joining layer extends at an angle of from 30° to 60° with respect to a base face (BF) of at least one of the adjacent prisms, wherein
- the second component is formed in the form of a mat,
wherein the shaping core material (2) is provided by means of extrusion, and
- the mat is introduced between a first and a second prismatic member (10.1, 10.2, 10.3, 10.4, 10.5, 10.6), wherein the second component has as a cover or a casing of the shaping core material a functional orientation of fibres having an angle of from 30° to 60° with respect to each other, and is connected to the shaping core of the prismatic members (10.1, 10.2, 10.3, 10.4, 10.5, 10.6), wherein
- both the first component and the second component extend into the joining layer, wherein the first component and the second component are connected in a materially engaging manner in the joining layer, and
- the composite component is joined via the second component by means of a thermoplastic matrix comprising the large number of prismatic members (10.1, 10.2, 10.3, 10.4, 10.5, 10.6) to form a deformable component having a comparatively high shear stiffness by means of hot-joining.

7. Composite component according to claim 6, **characterised in that**
- the shaping core material (2) and/or the functional orientation of the joining layers (2) form(s) a planar crosssectional pattern of hexagons, and
- abutting members which are joined, in particular in a planar manner, of the functional orientation of the joining layers (20) extend at an angle of from 30° to 60°, preferably of 45° within a variance of +/- 10°, preferably +/- 5°, with respect to a base face (BF) of the prisms, wherein the base face (BF) is orientated parallel with the base of the hexagon.

8. Composite component according to claim 6 or 7, **characterised in that** the shaping core material (2) contains at least one component of the group acrylonitrile butadiene styrene, polyamides, polylactate, polymethylmethacrylate, polycarbonate, polyethylene terephthalate, polyethylene, polypropylene, polystyrene, polyether ketone and polyvinyl chloride.

9. Composite component according to any one of claims 6 to 8, **characterised in that** the shaping core material (2) is reinforced by means of additional, internal, functionally orientated fibres.

10. Composite component (1001, 1002, 1003, 1004, 1005, 1006) according to any one of claims 6 to 9 in the form of a sandwich component for the wind turbine (100) using a large number of shaped composite components (1) in order to form a core component, **characterised in that** the core component is covered at least at one side by at least one covering layer.

11. Composite component (1001, 1002, 1003, 1004, 1005, 1006) according to any one of claims 6 to 10 in the form of a rotor blade element for a rotor blade (108) of the wind turbine (100) using a large number of shaped composite components (1) in order to form a core component, **characterised in that** the core component is surrounded by at least one rotor blade covering layer in order to form the rotor blade element in the form of a sandwich component for the wind turbine (100).

12. Wind turbine having a tower (102), a nacelle (104) and a rotor (106) having a rotor hub (110) and a number of rotor blades (108), **characterised in that** the rotor blade has a composite component according to any one of claims 6 to 11, and/or the tower and/or the nacelle and/or the rotor hub has/have a composite component (1001, 1002, 1003, 1004, 1005, 1006) according to any one of claims 6 to 10.

## Revendications

1. Procédé de fabrication d'un élément composite (1001, 1002, 1003, 1004, 1005, 1006) pour une éolienne (100) avec une pluralité de pièces moulées composites (1) à au moins deux composants, dans lequel un premier composant est formé à partir d'un matériau de noyau de façonnage (2) et un deuxième composant est formé en tant que partie d'une couche d'assemblage (20), dans lequel
- le matériau de noyau de façonnage (2), qui suit la forme d'un prisme en tant que corps prismatique (10.1, 10.2, 10.3, 10.4, 10.5, 10.6), est formé avec une surface de base polygonale (G, GF), dans lequel un polygone de la surface de base (G, GF) a une base (B) et un angle par rapport à la base qui est compris entre 30° - 60°, et
- une pluralité des corps prismatiques (10.1, 10.2, 10.3, 10.4, 10.5, 10.6) sont assemblés, dans lequel une orientation fonctionnelle des couches d'assemblage (20) se forme sur des branches se rencontrant de telle manière que la couche d'assemblage (20) s'étend selon un angle de 30°- 60° par rapport à une surface de base (BF) d'au moins un des prismes adjacents,
dans lequel
- le deuxième composant est formé sous la forme d'une natte, dans lequel
- le matériau de noyau de façonnage (2) est fourni par extrusion, et
- la natte est introduite entre un premier et un deuxième corps prismatique, dans lequel le deuxième composant présente en tant que recouvrement ou gainage du matériau de noyau de façonnage une orientation fonctionnelle de fibres avec un angle de 30°-60° et se relie au noyau de façonnage des corps prismatiques, dans lequel
- le premier composant et le deuxième composant s'étendent dans la couche d'assemblage (20), et le premier composant et le deuxième composant sont reliés par liaison de matière dans la couche d'assemblage (20), et
- l'élément composite est regroupé par l'intermédiaire du deuxième composant au moyen d'une matrice thermoplastique composée de la pluralité de corps prismatiques (10.1, 10.2, 10.3, 10.4, 10.5, 10.6) en un composant déformable avec une rigidité en cisaillement comparativement élevée.

2. Procédé selon la revendication 1, **caractérisé en ce que** l'angle par rapport à la base (B) du polygone est de l'ordre de 45° dans une variance de +/- 10°, de préférence de +/- 5°.

3. Procédé selon la revendication 1 ou 2, **caractérisé en ce que** se forme sur les branches se rencontrant une orientation fonctionnelle des couches d'assemblage (20), qui s'étend selon un angle de 45° dans une variance de +/- 10°, de préférence +/- 5°, par rapport à la surface de base (BF) des prismes.

4. Procédé selon l'une quelconque des revendications 1 à 3, **caractérisé en ce que** le matériau de noyau de façonnage (2), qui suit la forme d'un corps cylindrique, est formé avec une surface de base polygonale (G, GF).

5. Procédé selon l'une quelconque des revendications précédentes, **caractérisé en ce que** le matériau de noyau de façonnage (2) est assemblé en un corps prismatique (10.1, 10.2, 10.3, 10.4, 10.5, 10.6) sous la forme d'un polyèdre tridimensionnel, dans lequel l'angle des surfaces de polyèdre est de 30°-60°, de préférence une surface de polyèdre présente un angle de 45° dans une variance de +/- 10°, de préférence de +/- 5° par rapport à la surface de base (BF).

6. Elément composite (1001, 1002, 1003, 1004, 1005, 1006) pour une éolienne (100) avec une pluralité de pièces moulées composites (1) à au moins deux composants, dans lequel un premier composant est formé à partir d'un matériau de noyau de façonnage et un deuxième composant est formé en tant que partie d'une couche d'assemblage (20), dans lequel
- le matériau de noyau de façonnage (2), qui suit la forme d'un prisme en tant que corps prismatique (10.1, 10.2, 10.3, 10.4, 10.5, 10.6), est formé avec une surface de base polygonale (G, GF), dans lequel un polygone de la surface de base (G, GF) a une base et un angle par rapport à la base, qui est compris entre 30°-60°, et
- une pluralité des corps prismatiques (10.1, 10.2, 10.3, 10.4, 10.5, 10.6) sont assemblés, dans lequel est réalisée sur des branches se rencontrant une orientation fonctionnelle des couches d'assemblage de telle manière que la couche d'assemblage s'étend selon un angle de 30°-60° par rapport à une surface de base (BF) d'au moins un des prismes adjacents,
- le deuxième composant est formé sous la forme d'une natte, dans lequel
le matériau de noyau de façonnage (2) est fourni par extrusion, et
- la natte est introduite entre un premier et un deuxième corps prismatique (10.1, 10.2, 10.3, 10.4, 10.5, 10.6), dans lequel le deuxième composant présente en tant que recouvrement ou gaine du matériau de noyau de façonnage une orientation fonctionnelle de fibres avec un angle de 30°-60° les unes par rapport aux autres et est reliée au noyau de façonnage des corps prismatiques (10.1, 10.2, 10.3, 10.4, 10.5, 10.6),
dans lequel
- à la fois le premier composant et le deuxième composant s'étendent dans la couche d'assemblage, dans lequel le premier composant et le deuxième composant sont reliés par liaison de matière dans la couche d'assemblage, et
- l'élément composite est regroupé par l'intermédiaire du deuxième composant au moyen d'une matrice thermoplastique composée de la pluralité de corps prismatiques (10.1, 10.2, 10.3, 10.4, 10.5, 10.6) en un composant déformable avec une rigidité en cisaillement comparativement élevée, par assemblage à chaud.

7. Elément composite selon la revendication 6, **caractérisé en ce que**
- le matériau de noyau de façonnage (2) et/ou l'orientation fonctionnelle des couches d'assemblage (20) forment un modèle de section transversale plat composé d'hexagones,
et
- des branches en particulier assemblées à plat, se rencontrant de l'orientation fonctionnelle des couches d'assemblage (20) s'étendent selon l'angle de 30°-60°, de préférence de 45° dans une variance de +/- 10°, de préférence de +/- 5°, par rapport à une surface de base (BF) des prismes, dans lequel la surface de base (BF) est orientée de manière parallèle par rapport à la base de l'hexagone.

8. Elément composite selon la revendication 6 ou 7, **caractérisé en ce que** le matériau de base de façonnage (2) contient au moins un composant du groupe acrylonitrile butadiène styrène, polyamides, polylactate, polyméthacrylate de méthyle, polycarbonate, polytéréphtalate d'éthylène, polyéthylène, polypropylène, polystyrène, polyéthercétone et polychlorure de vinyle.

9. Elément composite selon l'une quelconque des revendications 6 à 8, **caractérisé en ce que** le matériau de noyau de façonnage (2) est renforcé par des fibres supplémentaires situées à l'intérieur, dirigées de manière fonctionnelle.

10. Elément composite (1001, 1002, 1003, 1004, 1005, 1006) selon l'une quelconque des revendications 6 à 9 sous la forme d'un composant en sandwich pour l'éolienne (100) en utilisant une pluralité de pièces moulées composites (1) pour la formation d'un élément de noyau, **caractérisé en ce que** l'élément de noyau est recouvert au moins d'un côté par au moins une couche de recouvrement.

11. Elément composite (1001, 1002, 1003, 1004, 1005, 1006) selon l'une quelconque des revendications 6 à 10 sous la forme d'un élément de pale de rotor pour une pale de rotor (108) de l'éolienne (100) en utilisant une pluralité de pièces moulées composites (1) pour la formation d'un élément de noyau, **caractérisé en ce que** l'élément de noyau est entouré par au moins une couche de recouvrement de pale de rotor, pour la formation de l'élément de pale de rotor sous la forme d'un composant en sandwich pour l'éolienne (100).

12. Eolienne présentant une tour (102), une nacelle (104) et un rotor (106) avec un moyeu de rotor (110) et un nombre de pales de rotor (108), **caractérisée en ce que** la pale de rotor présente un élément composite selon l'une quelconque des revendications 6 à 11 et/ou la tour et/ou la nacelle et/ou le moyeu de rotor présentent un élément composite (1001, 1002, 1003, 1004, 1005, 1006) selon l'une quelconque des revendications 6 à 10.
